# EUROPÄISCHE PATENTANMELDUNG

(11) **EP 1 582 571 A1**
(43) Veröffentlichungstag der Anmeldung: **05.10.2005**
(21) Anmeldenummer: 04006906.4
(22) Anmeldetag: 23.03.2004
(51) Int. Cl.: C09J 5/02, C08L 83/04, B65D 51/28

(54) **Zweikomponentige Haftvermittlerzusammensetzung und Verwendung einer Verpackung mit zwei Kammern**

(71) Anmelder: Sika Technology AG, 6340 Baar (CH)
(72) Erfinder: Trabesinger, Gerald, 8722 Kaltbrunn (CH); Zingerle, Gerhard, 9500 Wil (CH)
(74) Vertreter: Isler, Jörg

(57) **Zusammenfassung**

Die vorliegende Erfindung offenbart eine Zweikomponentige Haftvermittlerzusammensetzung zur Oberflächenvorbehandlung umfassend zwei Komponenten, wobei die erste Komponente **K1** mindestens eine hydrolysierbare Haftvermittlersubstanz **A** umfasst, welche ausgewählt ist aus der Gruppe umfassend Organo-Siliziumverbindungen, Organo-Titanverbindungen, Organo-Zirkoniumverbindungen und Mischungen daraus; und die zweite die zweite Komponente **K2** mindestens eine Verbindung B umfasst, die mit der Haftvermittlersubstanz **A** reagiert oder eine Kondensation der Haftvermittlersubstanz **A** auslöst oder katalysiert und wobei die erste und die zweite Komponenten im ungeöffneten Zustand in zwei durch mindestens eine Trennwand (3) voneinander getrennten Kammern (1,2) vorliegen.

Weiterhin sind offenbart die Verwendung einer Verpackung (5) mit zwei Kammern (1,2), die durch eine Trennwand voneinander getrennt sind, und eine Packung (6), bestehend aus einer Verpackung (5) und einer zweikomponentigen Haftvermittlerzusammensetzung, die in den durch eine Trennwand 3 von einander getrennten Kammern (1,2).

## Beschreibung

### Technisches Gebiet

Die Erfindung betrifft das Gebiet der zweikomponentigen Haftvermittlerzusammensetzungen zur Oberflächenvorbehandlung.

Die Erfindung betrifft ebenfalls die Verwendung einer Verpackung mit zwei Kammern.

### Stand der Technik

Haftvermittlersubstanzen werden seit langem für die Verbesserung der Haftung, insbesondere derjenigen von Klebstoffen und Dichtstoffen verwendet. Im besonderen sind als solche Haftvermittlersubstanzen Silan- und Titanat-Verbindungen seit langem bekannt. Es hat sich gezeigt, dass fallspezifisch je nach Material und Beschaffenheit der Oberflächen und dem verwendeten Kleb- oder Dichtstoff ganz spezifische Haftvermittlersubstanzen oder Mischungen davon ausgewählt werden müssen. Diese Haftvermittlerzusammensetzung werden als Primer oder Haft-Aktivatoren für die Vorbehandlung von zu verklebenden oder abzudichtenden Oberflächen verwendet. Einerseits werden im Stand der Technik solche Haftvermittlersubstanzen in einem inerten leicht flüchtigen Lösungsmittel gelöst, und sind dadurch bei Feuchtigkeitsausschluss über längere Zeit lagerfähig. Bei der Applikation dieser Haftvermittlerzusammensetzung auf eine Oberfläche verdunstet das leicht flüchtige Lösungsmittel und die Luftfeuchtigkeit hydrolysiert die Haftvermittlersubstanzen und führt zur deren Kondensation untereinander sowie gegebenenfalls mit polaren Gruppen der Oberfläche. Diese Reaktion benötigt jedoch eine gewisse Zeit bis der Haftungsaufbau erfolgt ist.

Wenn diese Haftvermittlersubstanzen mit Wasser in Kontakt kommen, hydrolysieren und kondensieren sie zu Oligo- und/oder Polymeren. Bei der Applikation solcher Oligomeren und vor allem solcher Polymeren tritt jedoch sehr häufig eine markant schlechtere bis überhaupt keine Haftvermittlerwirkung mehr auf. Es hat sich gezeigt, dass der Haftungsaufbau vielfach ungenügend ist, wenn auf die Haftvermittlerzusammensetzung ein sehr schnell vernetzender Klebstoff, insbesondere ein sehr schneller Polyurethanklebstoff appliziert wird.

Weil im Markt ein Trend weg von den leicht flüchtigen Lösungsmittel - vielfach auch als VOC (Volatile Organic Compounds) bezeichnet - herrscht, wurden Wege gesucht, wässrige Haftvermittlerzusammensetzungen herzustellen. Solche wässrige Silan-Primer sind beispielsweise in EP 0 577 014 B1 und EP 0 985 718 A2 beschrieben. US 6,511,752 beschreibt einen wässrigen Primer, der auf einer Silan-Titanat-Mischung beruht. All diesen bekannten wässrigen Silanzusammensetzungen ist gemein, dass deren Herstellung ein sehr aufwendiges Herstellverfahren mit sehr vielen Zusatzstoffen benötigen. Um eine einigermassen akzeptable Lagerstabilität zu gewährleisten, sind diese Verfahren weiterhin auf gewisse Silane oder Titanate beschränkt sind. Die Haltbarkeit der kommerziell erhältlichen wässrigen Vorbehandlungsmittel ist sehr beschränkt und liegt typischerweise unter 6 Monaten.

Es gibt verschiedene Verpackungskonzepte, insbesondere in der Lebensmittelbranche und der pharmazeutischen Industrie, welche zwei voneinander getrennte Kompartimente aufweisen. FR 2 616 322 beschreibt beispielsweise eine Vorrichtung mit zwei Kammern zum keimfreien Lösen von reaktiven Komponenten.

### Darstellung der Erfindung

Aufgabe der vorliegenden Erfindung ist es daher, eine Haftvermittlerzusammensetzung zur Verfügung zu stellen, die eine sehr lange Lagerstabilität hat, einfach herzustellen und einfach und sicher auf eine Oberfläche applizierbar ist sowie einer zugehörigen Verpackung.

Überraschenderweise hat sich nun gezeigt, dass diese Aufgabe durch eine zweikomponentige Haftvermittlerzusammensetzung zur Oberflächenvorbehandlung gemäss Anspruch 1 gelöst werden kann.

Kern der Erfindung ist es, dass mindestens eine hydrolysierbare Haftvermittlersubstanz und eine Verbindung, welche mit der Haftvermittlersubstanz reagiert oder welche eine Kondensation der Haftvermittlersubstanz auslöst oder katalysiert, in von einander über eine Trennwand getrennten Kammern gelagert werden.

Überraschenderweise hat sich gezeigt, dass mit einer frisch hergestellten Haftvermittlerlösung bedeutend bessere Resultate erzielt werden können, als mit einer solchen vor länger Zeit hergestellten Zusammensetzung.

Es wurde weiterhin eine Verwendung einer Verpackung gemäss Anspruch 18 sowie eine Packung gemäss Anspruch 26 gefunden.

Eine derartige Verpackung ist für den Anwender sehr einfach zu benutzen und es kann bei Bedarf eine frisch hergestellte Zusammensetzung appliziert und damit von den Vorteilen profitiert werden. Die Verpackung eignet sich prinzipiell für alle unter Feuchtigkeitsausschluss stabilen Haftvermittlersubstanzen, wodurch eine bedeutend breitere Palette von möglichen Haftvermittlersubstanzen zum Einsatz kommen kann, denn es kann die optimale Haftvermittlersubstanz oder -zusammensetzung verwendet werden ohne auf die Lagerstabilität der gemischten Zusammensetzung achten zu müssen.

### Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen. Richtung von Kräften sind mit Pfeilen angegeben.

Es zeigen:
- Fig. 1: einen Querschnitt durch eine Ausführungsform **P1** mit einer brechbaren Trennwand,
- Fig. 2: einen Querschnitt durch eine Ausführungsform **P2** mit einem Bersthilfsmittel, insbesondere mit einem Schneidmittel,
- Fig. 3: einen Querschnitt durch eine Ausführungsform **P3** mit einer Dichtung,
- Fig. 4: einen Querschnitt durch eine Ausführungsform **P4** mit einer heraus reissbaren Trennwand,
- Fig. 5-9: einen Querschnitt durch bevorzugte Ausführungsformen von **P1**
- Fig. 10: einen Querschnitt durch bevorzugte Ausführungsformen von **P2**
- Fig. 11: einen Querschnitt durch bevorzugte Ausführungsformen von **P4**

Es sind nur die für das unmittelbare Verständnis der Erfindung wesentlichen Elemente gezeigt. Bewegungen und Drücke sind durch Pfeile angegeben.

### Wege zur Ausführung der Erfindung

Die vorliegende Erfindung betrifft eine zweikomponentige Haftvermittlerzusammensetzung zur Oberflächenvorbehandlung, welche zwei Komponenten umfasst, wobei die erste Komponente **K1** mindestens eine hydrolysierbare Haftvermittlersubstanz **A** umfasst, welche ausgewählt ist aus der Gruppe umfassend Organo-Siliziumverbindungen, Organo-Titanverbindungen, Organo-Zirkoniumverbindungen und Mischungen daraus. Des weiteren umfasst die zweite Komponente **K2** mindestens eine Verbindung **B**, welche mit der Haftvermittlersubstanz **A** reagiert oder welche eine Kondensation der Haftvermittlersubstanz **A** auslöst oder katalysiert. Die erste und die zweite Komponenten liegen im ungeöffneten Zustand in zwei durch mindestens eine Trennwand voneinander getrennten Kammern vor.

Weiterhin betrifft die Erfindung die Verwendung einer Verpackung, welche zwei durch mindestens eine Trennwand voneinander getrennten Kammern für die Lagerung von zwei Komponenten **K1, K2** aufweist, wie sie im Detail in der zweikomponentige Haftvermittlerzusammensetzung in diesem Dokument beschrieben werden.

Weiterhin betrifft die Erfindung eine Packung, welche aus einer Verpackung mit zwei durch mindestens eine Trennwand voneinander getrennten Kammern sowie der erfindungsgemässen zweikomponentigen Haftvermittlerzusammensetzung besteht.

Die erste Komponente **K1** enthält mindestens eine hydrolysierbare Haftvermittlersubstanz **A** oder besteht daraus.

Die mindestens eine hydrolysierbare Haftvermittlersubstanz **A** kann eine Organo-Siliziumverbindung sein. Grundsätzlich sind alle dem Fachmann bekannte Organo-Siliziumverbindungen, welche als Haftvermittler eingesetzt werden, geeignet. Bevorzugt trägt diese Organo-Siliziumverbindung mindestens eine, insbesondere mindestens zwei, Alkoxygruppe, welche über eine Sauerstoff-Silizium-Bindung direkt an ein Siliziumatom gebunden ist oder sind. Weiterhin trägt die Organo-Siliziumverbindung mindestens einen Substituenten, welcher über eine Silizium-Kohlenstoffbindung an das Siliziumatom gebunden ist, und welcher gegebenenfalls eine funktionelle Gruppe aufweist, welche ausgewählt ist aus der Gruppe umfassend Oxiran-, Hydroxy-, (Meth)acryloxy-, Amino-, Mercapto- und Vinylgruppe. Insbesondere handelt es sich bei der hydrolysierbaren Haftvermittlersubstanz **A** um eine Verbindung der Formel (I)

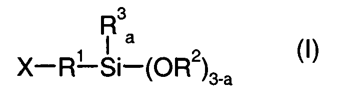

Der Substituent R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.

Der Substituent R² steht für eine Alkylgruppe mit 1 bis 5 C-Atomen, insbesondere für Methyl oder Ethyl.

Weiterhin steht der Substituent R³ für eine Alkylgruppe mit 1 bis 8 C-Atomen, insbesondere Methyl und der Substituent X steht für ein H, oder eine funktionelle Gruppe, welche ausgewählt ist aus der Gruppe umfassend Oxiran, OH, (Meth)acryloxy, Amin, SH und Vinyl.

Schliesslich steht a für einen der Werte 0,1 oder 2. Bevorzugt ist a = 0.

Als Substituenten R¹ bevorzugt ist Methylen-, Propylen-, Methylpropylen-, Butylen- oder Dimethylbutylengruppe. Bevorzugt ist R¹ eine Propylengruppe.

Geeignete Organo-Siliziumverbindungen sind kommerziell gut erhältlich und sind insbesondere bevorzugt ausgewählt aus der Gruppe umfassend Methyltriacetoxysilan, Ethyltriacetoxysilan, 3-Methacryloxypropyltrialkoxysilane, 3-Aminopropyltrialkoxysilane, Bis-[3-(trialkoxysilyl)-propyl]-amine, Tris-[3-(trialkoxysilyl)-propyl]-amine, 3-Aminopropyltrialkoxysilane, N-(2-Aminoethyl)-3-aminopropyl-trialkoxysilane, N-(2-Aminoethyl)-N-(2-Aminoethyl)-3-aminopropyl-trialkoxysilane, 3-Glycidyloxypropyltrialkoxysilane, 3-Mercaptopropyltrialkoxysilane, Vinyltrialkoxysilane, Methyltrialkoxysilane, Octyltrialkoxysilane, Dodecyltrialkoxysilane und Hexadecyltrialkoxysilane, insbesondere geeignet sind die Methoxy- und Ethoxysilane der oben genannten Verbindungen.

Die mindestens eine hydrolysierbare Haftvermittlersubstanz **A** kann weiterhin eine Organo-Titanverbindung sein. Grundsätzlich sind alle dem Fachmann bekannte Organo-Titanverbindungen, welche als Haftvermittler eingesetzt werden, geeignet.

Insbesondere geeignet sind Organo-Titanverbindung, welche mindestens eine funktionelle Gruppe trägt, welche ausgewählt ist aus der Gruppe umfassend Alkoxygruppe, Sulfonatgruppe, Phosphate, Carboxylatgruppe Acetylacetonat, oder Mischungen davon trägt, und welche über ein Sauerstoff-Titan-Bindung direkt an ein Titanatom gebunden ist.

Als Alkoxygruppen haben sich insbesondere lsopropoxy- und sogenannte Neoalkoxy-Substituenten, insbesondere der folgenden Formel besonders geeignet erwiesen

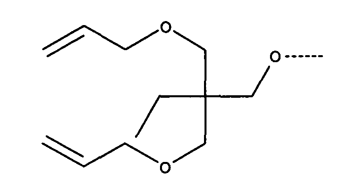

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel

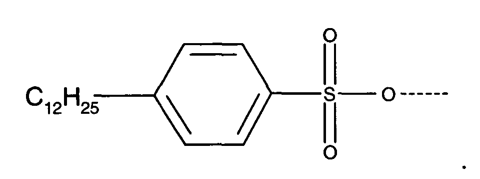

Als Carboxylatgruppen haben sich insbesondere Carboxylate von Fettsäuren besonders geeignet erwiesen. Als bevorzugte Carboxylate gelten Stearate und Isostearate.

In allen den obigen Formel zeigt die gestrichelte Bindung hierbei die Verbindung zum Titanatom an.

Organo-Titanverbindungen sind kommerziell erhältlich, beispielsweise bei der Firma Kenrich Petrochemicals oder DuPont. Beispiele für geeignete Organo-Titanverbindungenverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, , KR 55, LICA1, LICA 09, LICA 12, LICA 38, LICA 44, LICA 97, LICA 99, KR OPPR, KROPP2, von Kenrich Petrochemicals oder Tyzor ® ET, TPT, NPT, BTM AA, AA-75, AA-95, AA-105, TE, ETAM von DuPont. Bevorzugt gelten Ken-React® KR 7, KR 9S, KR 12, KR 26S, KR 38S, KR44, LICA 09, LICA 44 sowie Tyzor® ET, TPT, NPT, BTM, AA, AA-75, AA-95, AA-105, TE, ETAM von DuPont.

Die mindestens eine hydrolysierbare Haftvermittlersubstanz **A** kann weiterhin eine Organo-Zirkoniumverbindung sein. Grundsätzlich sind alle dem Fachmann bekannte Organo-Zirkoniumverbindungen, welche als Haftvermittler eingesetzt werden, geeignet. Insbesondere geeignet sind Organo-Zirkoniumverbindungen, welche mindestens eine funktionelle Gruppe trägt, welche ausgewählt ist aus der Gruppe umfassend Alkoxygruppe, Sulfonatgruppe, Carboxylatgruppe, Phosphat oder Mischungen davon trägt, und welche über ein Sauerstoff-Zirkonium-Bindung direkt an ein Zirkoniumatom gebunden ist.

Als Alkoxygruppen haben sich insbesondere Isopropoxy- und sogenannte Neoalkoxy-Substituenten, insbesondere der folgenden Formel besonders geeignet erwiesen

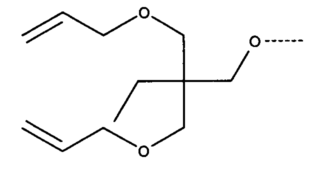

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel

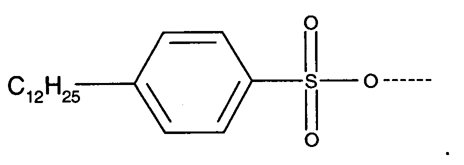

Als Carboxylatgruppen haben sich insbesondere Carboxylate von Fettsäuren besonders geeignet erwiesen. Als bevorzugte Carboxylate gelten Stearate und Isostearate.

In allen den obigen Formel zeigt die gestrichelte Bindung hierbei die Verbindung zum Zirkoniumatom an.

Organo-Zirkoniumverbindungen sind kommerziell erhältlich, beispielsweise bei der Firma Kenrich Petrochemicals. Beispiele für geeignete Organo-Titanverbindungenverbindungen sind beispielsweise Ken-React® NZ 38J, NZ TPPJ, KZ OPPR, KZ TPP, NZ 01, NZ 09, NZ 12, NZ38, NZ 44, NZ 97.

Weiterhin kann die erste Komponente **K1** Mischungen von mindestens einer Organo-Siliziumverbindung mit mindestens einer Organo-Titanverbindung und/oder mit mindestens einer Organo-Zirkoniumverbindung enthalten. Ebenso sind Mischungen von mindestens einer Organo-Titanverbindung mit mindestens einer Organo-Zirkoniumverbindung möglich. Bevorzugt sind Mischungen von mindestens einer Organo-Siliziumverbindung mit mindestens einer Organo-Titanverbindung.

Besonders bevorzugt sind Mischungen von mehreren Organo-Siliziumverbindungen oder Mischungen von einer Organo-Siliziumverbindung mit einer Organo-Titanverbindung, bzw Organo-Zirkoniumverbindung.

Als Mischungen von Organo-Siliziumverbindungen haben sich besonders gut Mischungen von Haftvermittlersubstanzen **A** der Formeln (I) erwiesen, wobei mindestens eine dieser Substituenten **H** als Substituenten X trägt und mindestens eine dieser Substanzen eine funktionelle Gruppe, welche ausgewählt ist aus der Gruppe umfassend Oxiran, (Meth)acryloxy, Amin, SH und Vinyl, als Substituenten X trägt. Bevorzugt handelt es sich bei diesen Mischungen um mindestens einem Alkyl-Trialkoxysilan mit einem Aminoalkyl-Trialkoxysilan und/oder Mercaptoalkyl-Trialkoxysilan.

Die zweite Komponente **K2** enthält mindestens eine Verbindung **B**, welche mit der Haftvermittlersubstanz **A** reagiert oder welche eine Kondensation der Haftvermittlersubstanz **A** auslöst oder katalysiert, oder besteht daraus.

Die Verbindung **B**, welche mit der Haftvermittlersubstanz **A** reagiert oder welche eine Kondensation der Haftvermittlersubstanz **A** auslöst oder katalysiert, ist bevorzugt eine Organo-Zinnverbindung oder eine Säure.

In einer bevorzugten Ausführungsform ist die Verbindung **B** eine Organo-Zinnverbindung und stellt vorzugsweise eine Dialkyl-Zinndiacetylacetonat oder ein Dialkylzinndicarboxylat dar und ist insbesondere Dibutylzinndilaurat oder Dibutylzinndiacetat. Bevorzugt ist Verbindung **B** Dibutylzinndilaurat..

In einer weiteren bevorzugten Ausführungsform ist die Verbindung **B** eine Säure. Die Säure kann eine organische oder eine anorganische Säure sein. Die Säure weist typischerweise einen pKa1 von weniger als 6 auf.

Als anorganische Säure eignen sich insbesondere phosphorhaltige Säuren, schwefelhaltige Säuren. Als besonders geeignet haben sich Sulfonsäure oder Phosphorsäure, insbesondere Schwefelsäure erwiesen.

Als organische Säuren eignen sich insbesondere Ameisen-, Essig-, Aminosäure. Als besonders geeignet hat sich Essigsäure erwiesen.

Weitere Bestandteile in der ersten **K1** und / oder zweiten Komponente **K2** sind möglich. Insbesondere sind hierfür übliche Bestandteile wie Lösungsmittel, Bindemittel, Füllstoffe, Mischhilfsmittel, Additive, zu nennen. Als Lösungsmittel sind leichtflüchtige Lösungsmittel wie Wasser, Alkohole, insbesondere Ethanol, Isopropanol, Butanol, Aldehyde oder Ketone, insbesondere Aceton, Methylethylketon, Kohlenwasserstoffe, insbesondere Hexan, Heptan, Cyclohexan, Xylol, Toluol, White Spirit sowie deren Mischungen, insbesondere Ethanol, Methanol, Isopropanol oder Hexan, bevorzugt.

Als Bindemittel sind besondere Lackbindemittel, wie Prepolymere und Addukte von Polyisocyanaten oder Epoxidharzen, geeignet. Bevorzugt sind Isocyanatgruppen aufweisende Polyurethanprepolymere, hergestellt aus Polyolen und Polyisocyanaten.

Als Füllstoff sind bevorzugt Russe, pyrogene Kieselsäuren, Kreiden, deren Oberflächen bei Bedarf modifiziert worden ist.

Als Mischhilfsmittel sind bevorzugt Kugeln, insbesondere Metall- oder Glaskugeln.

Als Additive sind besonderes Verlaufsmittel, Entschäumer, Tenside, Biozide, Antiabsetzmittel, Stabilisatoren, Inhibitoren, Pigmente, Farbstoffe, Korrosionsschutzmittel und Geruchsstoffe zu nennen.

Bei der Auswahl der zusätzlichen möglichen Bestandteile für die erste **K1** und/oder zweite Komponente **K2** ist jedoch zu berücksichtigen, dass diese zusätzlichen Bestandteilen mit den in der jeweiligen Komponenten vorhandenen Verbindungen, insbesondere **A**, beziehungsweise **B**, nicht reagieren oder nicht zu Lagerstabilitätsproblemen führen.

Die erste **K1** und zweite Komponente **K2** weisen bei Raumtemperatur eine Konsistenz zwischen flüssig und pulverförmig auf, wobei mindestens eine der Komponenten einen gewissen flüssigen Anteil aufweisen muss. Insbesondere bevorzugt sind die erste **K1** und die zweite Komponente **K2** flüssig, weil sich flüssige, insbesondere dünnflüssige, Komponenten besser mischen lassen als hochpastöse. Bevorzugt sind die erste **K1** und zweite Komponente **K2** eine Lösung, eine Suspension oder eine Dispersion. Falls eine Suspensionen oder eine Dispersion vorliegt ist die Stabilität ein wichtiges Merkmal. Die Stabilität kann durch dem Fachmann gesteuert werden beispielsweise durch Variation von Lösungsmittel, Konzentrationen, Prozessparameter bei der Herstellung oder durch Verwendung von geeigneten Additiven, insbesondere Tensiden, Emulgatoren, Co-Emulgatoren oder Stabilisatoren.

Besonders geeignete erste **K1** und zweite Komponenten **K2** weisen eine Lagerstabilität von mindestens 6 Monaten insbesondere mindestens 9 Monaten auf, ohne dass Ausfällungen oder Separationen auftreten. Zwar ist die Abwesenheit von Ausfällungen oder Separationen bevorzugt, Ausfällungen oder Separationen von geringem Ausmass sind jedoch nicht schädlich, wenn sie durch Schütteln, insbesondere durch Schütteln während weniger als 10 Minuten, wieder rückgängig gemacht werden können.

In einer bevorzugten Ausführungsform einer zweikomponentigen Haftvermittlerzusammensetzung enthält die erste Komponente mindestens eine Organo-Siliziumverbindung **A**, mindestens ein Polyurethanprepolymer, welches mindestens zwei Isocyanatgruppen aufweist, sowie gegebenenfalls Russ und gegebenenfalls ein leichtflüchtiges Lösungsmittel.

In einer weiteren bevorzugten Ausführungsform einer zweikomponentigen Haftvermittlerzusammensetzung enthält die erste Komponente mindestens eine Organo-Siliziumverbindung A und/oder mindestens eine Organo-Titanverbindung und/oder mindestens einer Organo-Zirkoniumverbindung und die zweite Komponente Wasser sowie mindestens eine Säure. Der pH der gemischten zweikomponentigen Haftvermittlerzusammensetzung liegt vorzugsweise zwischen 2 und 8, insbesondere zwischen 3 und 5.

Die Kammern, in denen sich die zwei Komponenten **K1, K2** befinden, sind durch mindestens eine Trennwand voneinander getrennt. Die möglichen und bevorzugten Ausgestaltungen der Kammern sowie der Trennwände wird im Folgenden schematisch beschrieben.

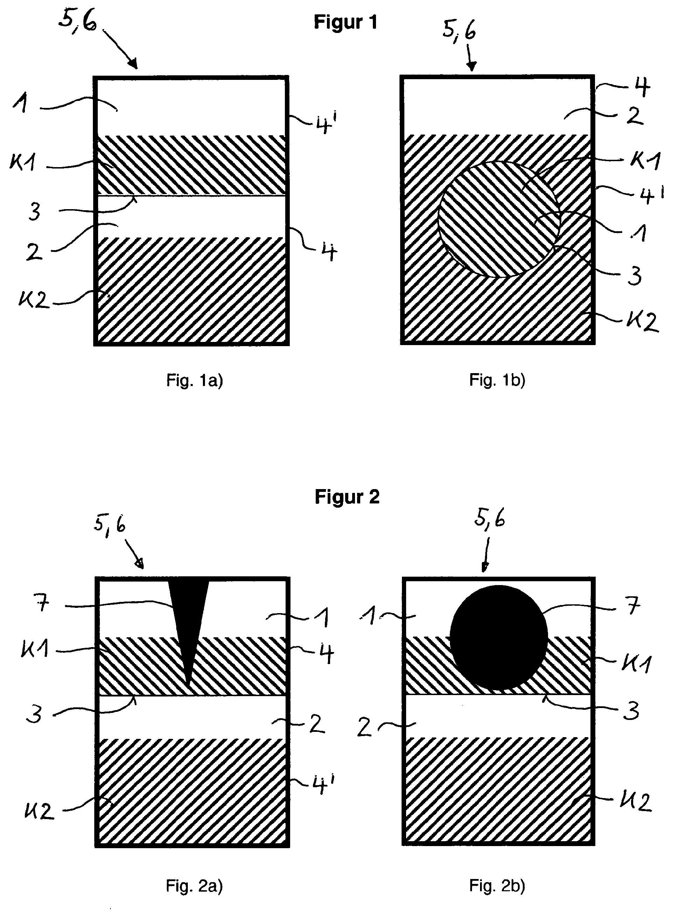

Figur 1 zeigt eine Ausführungsform **P1** einer Packung 6, respektive einer verwendeten Verpackung 5. In dieser Ausführungsform ist die Trennwand 3 aus einem zerbrechlichen Material gefertigt. In Figur 1 a ist eine Variante gezeigt, in welcher die erste Kammer 1 nicht vollständig von der zweiten Kammer 2 umgeben ist, während in Figur 1 b eine Variante beschrieben ist, in welcher die erste Kammer 1 vollständig von der zweiten Kammer 2 umgeben ist. Die Trennwand 3 zwischen den zwei Kammern bricht bei Aufbringung von Druck, wodurch die zwei Komponenten **K1, K2** miteinander in Kontakt geraten, mischen und/oder reagieren können. Der Druck wird typischerweise von aussen durch Krafteinwirkung auf die Aussenwand 4, 4' der Kammern erzeugt. Diese Krafteinwirkung ist bevorzugt eine Schlageinwirkung oder Verbiegen der Verpackung. Das Material der Trennwand 3 ist typischerweise aus Glas, Aluminium, einer Aluminiumlegierung, aus einem dünnen Kunststoff oder einem Verbundmaterial gefertigt. Die Trennwand 3 muss in einer Dicke gefertigt sein, dass sie nicht bereits durch eine unbeabsichtigte Krafteinwirkung, wie sie beispielsweise üblicherweise bei Transporten vorkommen, bricht. Die Aussenwand 4,4' muss derart gestaltet sein, dass sie bei der Aufbringung des Druckes, der zum Brechen der Trennwand 3 führt, nicht bricht oder einreisst. Die Aussenwand 4,4' ist entweder aus einem Metall oder einem elastischen Kunststoff gefertigt.

Figur 2 zeigt eine Ausführungsform **P2** einer Packung 6, respektive einer verwendeten Verpackung 5 mit Berstmitteln, insbesondere Schneidmittel 7. Bei dieser Ausführungsform wird der Druck durch ein Schneidmittel 7 auf die Trennwand 3 gebracht. Das Schneidmittel 7 ist entweder beweglich und wird auf die feststehende Trennwand 3 gedrückt, oder aber das Schneidmittel 7 ist fixiert und die Trennwand 3 wird auf das Schneidmittel 7 gedrückt. Durch den Druck reisst diese ein, so dass die zwei Komponenten **K1, K2** miteinander in Kontakt geraten und/oder reagieren können. Das Schneidmittel 7 ist vorzugsweise im Lagerzustand der Packung in einer gewissen Abstand von der Trennwand 3 entfernt. Schneidmittel 7 und Trennwand 3 können aufeinander verschoben werden. Dies erfolgt entweder durch eine Aufbringung von Druck und damit durch eine Verformung der Aussenwand 4,4' oder mit Hilfe eines Gewindes. Die Aussenwand 4,4' muss derart gestaltet sein, dass sie bei der Aufbringung des Druckes, der zum Durchbrechen der Trennwand 3 mittels Schneidmittels 7 führt, nicht selber bricht oder einreist. Die Aussenwand 4,4' ist entweder aus einer Metallfolie oder einem elastischen Kunststoff gefertigt. Die Art des Schneidmittels kann grundsätzlich sehr unterschiedlich gestaltet sein. So zeigt Fig. 2a) eine scharfe Spitze als Schneidmittel 7, während Fig. 2b eine Kugel als Bersthilfsmittel, insbesondere Schneidmittel, 7 zeigt. Bevorzugt weist das Schneidmittel 8 entweder Spitzen oder Kanten auf. Solche Spitzen oder Kanten erleichtern das Durchtrennen der Trennwand 3. Deshalb ist eine Ausführungsform gemäss Figur 2a bevorzugt.

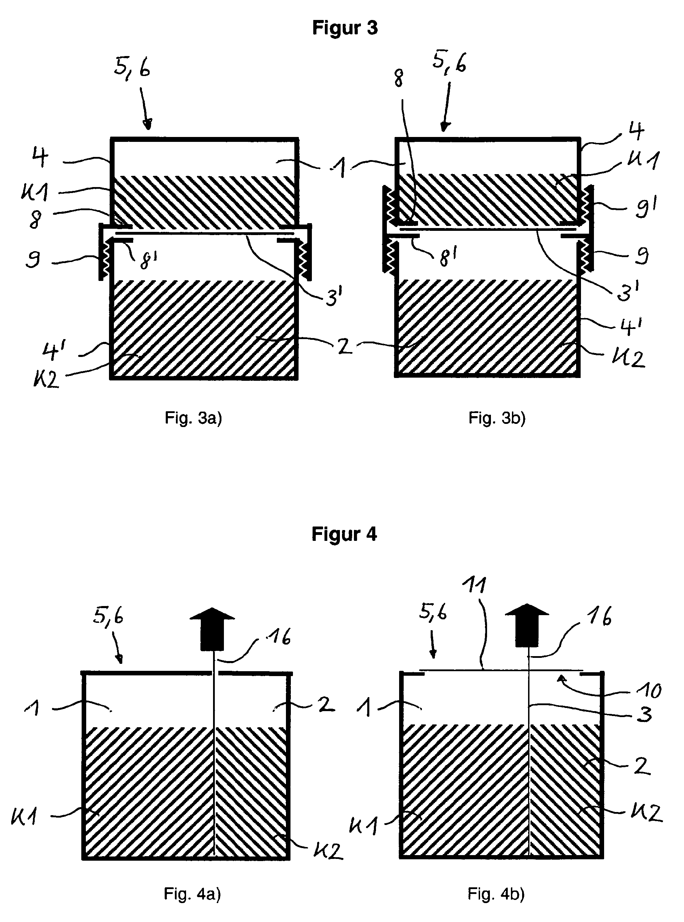

Figur 3 zeigt eine Ausführungsform P3 einer Packung 6, respektive einer verwendeten Verpackung 5. In dieser Ausführungsform ist die Trennwand durch eine Dichtung 3' realisiert. Die Dichtung 3' trennt im ungeöffneten Zustand der Verpackung 5 die zwei Kammern 1,2 voneinander ab. Dies wird dadurch erreicht, dass im ungeöffneten Zustand die Dichtung 3' durch mindestens zwei Wandungen 8,8' der Aussenwand 4,4' gequetscht wird. Mindestens eine der Wandungen 8,8' ist durch äusseren Einfluss bewegbar ausgestaltet. Eine solche Bewegbarkeit wird insbesondere über ein Gewinde 9, 9' erreicht. Beim gewollten Öffnen wird die Wandung 8, 8' von der gequetschten Dichtung 3' entfernt, wodurch diese die Abdichtfunktion verliert und einen Durchgang öffnet, so dass die zwei Komponenten **K1, K2** miteinander in Kontakt geraten und/oder reagieren können. In einem besonderen Variante dieser Ausführungsform wird beim Öffnen oder beim einem Schütteln der Packung die Dichtung 3' so locker, dass sie in die eine Kammer fällt.

Die Dichtung 3' ist aus einem elastischen Material gefertigt, wie sie üblicherweise für das Abdichten von Flüssigkeiten verwendet werden.

Figur 3 a) zeigt eine Ausführung mit einem Gewinde 9, während Figur 3 b) zwei Gewinde 9, 9' aufweist. Figur 3 b) ist gegenüber 3a) vorteilhaft, weil in einem ersten Schritt die erste Kammer mit einer Komponente **K1** oder **K2** befüllt werden kann, anschliessend die Dichtung 3' über ein Gewinde 9 aufgeschraubt werden kann und damit über die Wandung 8 dicht verschlossen werden kann und erst zu einem späteren Zeitpunkt dieses Teil, das die Funktion eines Deckels aufweist, auf den zweiten Teil der Packung, welche die andere Komponente **K2** oder **K1** mit dem zweiten Gewinde 9' aufgeschraubt werden kann und somit auch die zweite Kammer über die Wandung 8' dicht abschliessen kann.

Figur 4 zeigt eine Ausführungsform **P4** einer Packung 6, respektive einer verwendeten Verpackung 5. In dieser Ausführungsform ist die Trennwand 3 herausreissbar gestaltet. Hierbei ist zwischen den Kammern eine dünne Trennwand 3 vorhanden, die durch einen äusseren Eingriff herausgerissen wird, so dass die zwei Komponenten **K1, K2** miteinander in Kontakt geraten und/oder reagieren können. Die Verbindungsstellen im Bereich, wo die Trennwand mit der Innenwand der Kammern 1,2 verbunden sind, weisen hierzu Sollbruchstellen auf. Für das Herausreissen eignen sich insbesondere Ausführungsformen, bei denen die Trennwand 3 mit einer Reisslasche 16 verbunden ist. Figur 4a) zeigt eine Variante, bei welcher lediglich die Trennwand 3 mit den Innenwänden der Kammern 1,2 verbunden ist. Die Verbindungsstellen im Bereich, wo die Trennwand mit der Innenwand der Kammern 1,2 verbunden sind, weisen hierzu -ebenso wie der Bereich, wo die Reisslasche 16 mit der Aussenwand verbunden ist- eine Sollbruchstelle auf. In Figur 4b) wird beim Herausreissen der Trennwand gleichzeitig auch die mit der Reisslasche 16 und der Trennwand verbundene Abdeckung 11 von der Packung abgetrennt, so dass eine Öffnung 10 entsteht, durch welche die miteinander in Kontakt geratenen zwei Komponenten der Verpackung entnommen werden können.

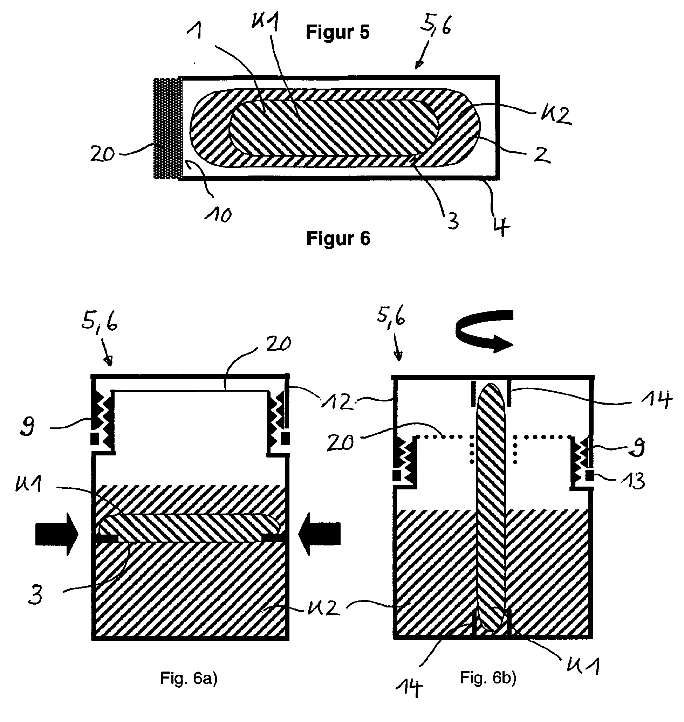

Figur 5 zeigt eine bevorzugte Ausführungsform der Ausführungsform **P1.** In dieser Ausführungsform besteht die erste Kammer 1 mit der einen Komponente **K1** aus einer zerbrechlichen Glas- oder Kunststoffampulle 3. Die zweite Kammer 2 mit der anderen Komponente **K2** ist ebenfalls eine zerbrechlichen Glas- oder Kunststoffampulle. Die zwei Ampullen sind vorzugsweise in einer Rohr-in-Rohr-Anordnung oder -wie dargestellt- in einer Ampulle-in-Ampulle-anordnung angeordnet. Diese Ampullenanordnung ist in einem Behälter, dessen Aussenwänden 4 aus biegsamen Kunststoff oder Karton gefertigt ist, eingelassen. Weiterhin weist dieser Kunststoffbehälter eine Öffnung 10 auf, die durch eine poröse Abdeckung 20, insbesondere durch einen Filzstreifen oder einen Schwamm abgedeckt ist. Beim Aktivieren der Packung werden durch ein Verbiegen der Aussenwände 4 oder einen Schlag auf die Aussenwände des Behälters aus Kunststoff oder Karton die Glasampullen aufgebrochen, so dass sich die Komponenten **K1, K2** mischen und/oder reagieren können. Die Reaktionsmischung tränkt den Filz oder Schwamm 20 und kann mittels dessen Kontakt mit einer Oberfläche appliziert werden. Der Filz oder Schwamm hilft weiterhin allfällige Splitter, welche von der zerbrochenen Ampulle herrühren können, vor dem Austreten aus der Packung 5, 6 zu verhindern. Diese Ausführungsform **P1** stellt somit eine Einwegpackung für die Applikation eines zweikomponentiger Haftvermittlerzusammensetzung dar. Sie ist speziell für kleine Mengen gut geeignet. Insbesondere eignet sich diese Packung für die Vorbehandlung einer Fahrzeugscheibe, insbesondere einer Autoscheibe.

Figur 6 zeigt eine weitere bevorzugte Ausführungsform der Ausführungsform **P1.** Hierbei ist eine zerbrechliche Glas- oder Kunststoffampulle 3, welche die eine Komponente **K1** enthält, in einer Flasche mit einem Fixierungsmittel 14 festgehalten, welche die andere Komponente **K2** enthält. Figur 6a) zeigt eine Ausführungsform mit einer liegenden Ampulle 3. Die Ampulle kann hierbei gegebenenfalls durch ein starres Mittel, beispielsweise einen Metallspatel, zerbrochen werden, so dass sich die Komponenten **K1, K2** mischen und/oder reagieren können, oder die Ampulle kann durch ein Zusammendrücken oder Schlagen der Flasche zum Bersten gebracht werden. Das starre Mittel kann durch eine Öffnung der Flasche eingeführt werden. Nach dem Entfernen des Mittels kann die Flasche gegebenenfalls verschlossen und geschüttelt werden. Figur 6b) zeigt eine Ausführungsform mit einer stehenden Ampulle 3. Die Ampulle ist derart gestaltet, dass sie länger als die Flaschenhöhe ist und in den Deckel 12 in ein Fixierungsmittel 14 hineinragt. Der Deckel 12 trägt ein Gewinde 9 und ist vorzugsweise mit einer Sicherheitslasche 13 versehen, die ein versehentliches Drehen des Deckels 12 verhindert. Bei der gewollten Aktivierung wird die Sicherheitslasche 13 entfernt und der Deckel 12 gedreht, wodurch sich die Basis des Deckels 12 auf die Ampulle 3 hinzubewegt und sie unter Druck zum Zerbrechen oder Einreissen bringt, so dass sich die Komponenten **K1, K2** mischen und/oder reagieren können. Durch den Deckelverschluss ist weiterhin gewährleistet, dass die Flasche dicht ist und geschüttelt werden kann. In beiden Ausführungsformen gemäss Figur 6a und 6b ist es zu bevorzugen, dass nach dem Mischen der Komponenten **K1, K2** für das Auftragen des Reaktionsgemisches ein Filz oder ein feines Netz 20 angebracht wird, um allfällige Splitter, welche von der zerbrochenen Ampulle herrühren können, an dem Austreten aus der Packung zu hindern. Es ist bevorzugt, dass ein Filz oder ein Schwamm verwendet wird, weil dieser von der zweikomponentigen Haftvermittlerzusammensetzung durchtränkt wird und deshalb sehr gut zu dessen Applikation geeignet ist. Der Filz oder Schwamm ist typischerweise mit einem Formteil verbunden, welcher ein Gewinde aufweist und auf das Gewinde 9 der Flasche geschraubt werden kann.

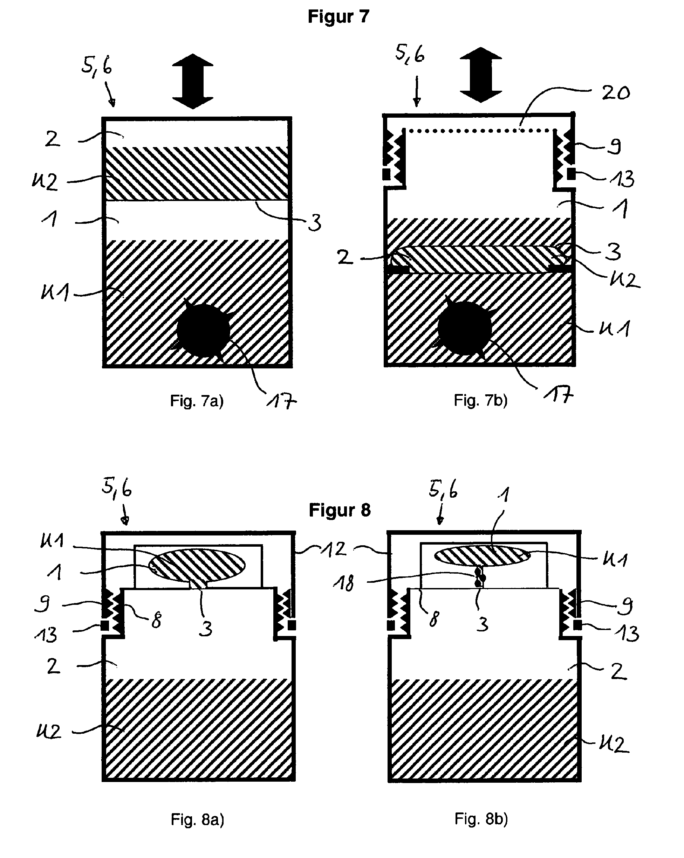

Figur 7 zeigt eine weitere bevorzugte Ausführungsform der Ausführungsform **P1.** Hierbei ist in einer Kammer 1 mindestens eine Metallkugel als Mischungshilfsmittel 17 vorhanden. Durch Schütteln wird die zwischen den zwei Kammern vorhandene Trennwand 3 durch die Kugel 17 zerbrochen oder eingerissen, so dass sich die Komponenten **K1, K2** mischen und/oder reagieren können. Die Kugel 17 kann bei Bedarf mit Spitzen oder Kanten versehen sein, um ein Einreissen der Trennwand 3 zu erleichtern. Die Dicke und Art der Trennwand 3 sowie die Menge und Oberflächengestalt der verwendeten Kugeln 17 ist derart zu wählen, dass die Zerstörung der Trennwand 3 durch einfaches Schütteln der Packung 6 möglich ist, aber nicht ungewollt, wie bereits bei kleinen Erschütterungen, wie sie bei Transporten vorkommen. Neben der in Figur 7a) gezeigten Variante mit Trennwand 3, die sich zwischen den Aussenwänden 4,4' zwischen den Kammern spannt, wird in Figur 7b) eine Abwandlung der in Figur 6 gezeigte Ampulle 3, welche die eine Komponente enthält, dargestellt.

Figur 8 zeigt eine weitere bevorzugte Ausführungsform der Ausführungsform **P1.** In dieser Ausführungsform ist die eine Komponente **K1** in einer Kammer 1 abgepackt, welche eine Blase 21 bildet. In Figur 8a ist die Blase 21 derart ausgestaltet, dass an deren Basis sie mit der Trennwand 3 verbunden ist und dort eine Sollbruchstelle aufweist. Durch Entfernen der Sicherheitslasche 13 kann der Deckel 12 über das Gewinde 9 zugedreht werden, wodurch sich die Basis des Deckels 12 auf die Blase hin bewegt. Dadurch wird die Blase 21 gequetscht bis ein genügend grosser Druck entsteht, dass die Sollbruchstelle bricht, so dass sich die Komponenten **K1, K2** mischen und/oder reagieren können. Diese Ausführungsform ist geeignet insbesondere für dünnflüssige Komponenten **K1, K2.** Es kann aber auch nach dem Entfernen der Sicherheitslasche 13 der Deckel 12 abgeschraubt werden und die Blase 1,2 von Hand manuell gequetscht und die darin enthaltene Komponente ausgepresst werden. In Figur 8b) weist die Blase 21 einen Klemmverschluss 18 auf. Durch das Verquetschen der Wand des Durchgangs zwischen den Kammern 1 und 2 bildet diese die Trennwand 3, welche die zwei Kammern 1,2 in ungeöffnetem Zustand voneinander abtrennt. Beim Öffnen wird zuerst der Deckel 12 mittels Gewinde 9 abgeschraubt. Anschliessend wird der Klemmverschluss 18 entfernt, wodurch der Durchgang zwischen den Kammern 1 und 2 geöffnet wird, so dass sich die Komponenten **K1, K2** mischen und/oder reagieren können. Dies kann durch eine Auspressen der Blase 21 noch unterstützt werden. In beiden Ausführungsformen wird vorzugsweise die Blase mit der Wandung 8 der anderen Kammer 2 derart verbunden ausgestaltet, dass sie leicht entfernt werden kann, um anschliessend zur Applikation der Haftvermittlerzusammensetzung einen Filz oder einen Schwamm, insbesondere mit Hilfe des Gewindes 9 an der Öffnung 10 zu befestigen zu können.

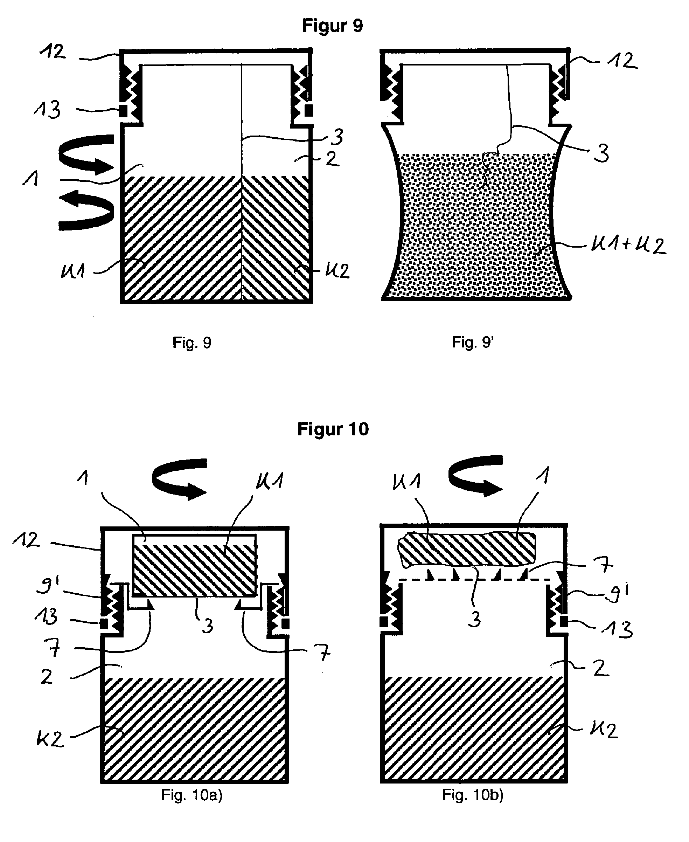

Figur 9 zeigt eine weitere bevorzugte Ausführungsform der Ausführungsform **P1.** Hierbei handelt es sich um eine Flasche 5 oder einen Doppelschlauchbeutel 5, welche zwei Kammern 1,2 aufweist, welche durch eine in Längsrichtung der Flasche oder Beutels angeordnete Trennwand 3 von einander abgetrennt sind. Die Aussenwände 4,4' der Flasche 5 oder Beutels 5 sind aus einem sehr elastischen Material gefertigt, während die Trennwand 3 entweder aus einem starren Material oder in einer sehr dünnen Schichtstärke gefertigt ist. Durch axiales Verdrehen der Flasche 5 oder des Doppel-Beutels 5 wird die Trennwand sehr stark gedehnt oder belastet, so dass die Trennwand 3 einreisst -dargestellt in Figur 9'-, so dass sich die Komponenten **K1, K2** mischen und/oder reagieren können. Bevorzugt weist der Beutel oder die Flasche an deren Ende ein Gewinde 9 mit einem dicht schliessenden Deckel 12 auf. Dieser Deckel 12 kann nach dem Mischen oder Schütteln geöffnet werden und das Reaktionsgemisch auf eine Oberfläche appliziert werden. Weiterhin bevorzugt kann auf dieses Gewinde 9 ein Filz aufgeschraubt werden.

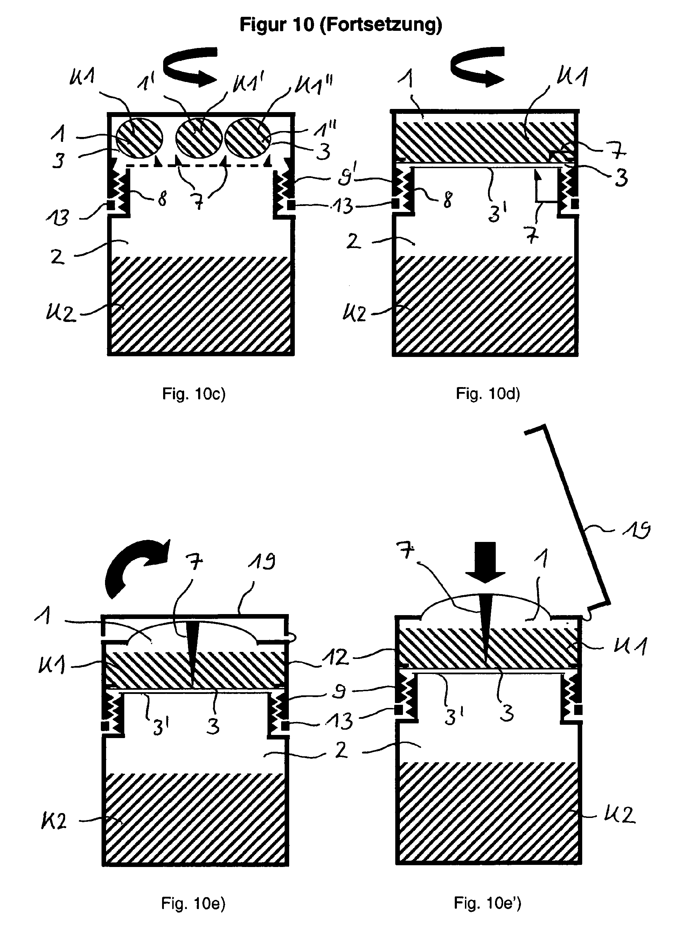

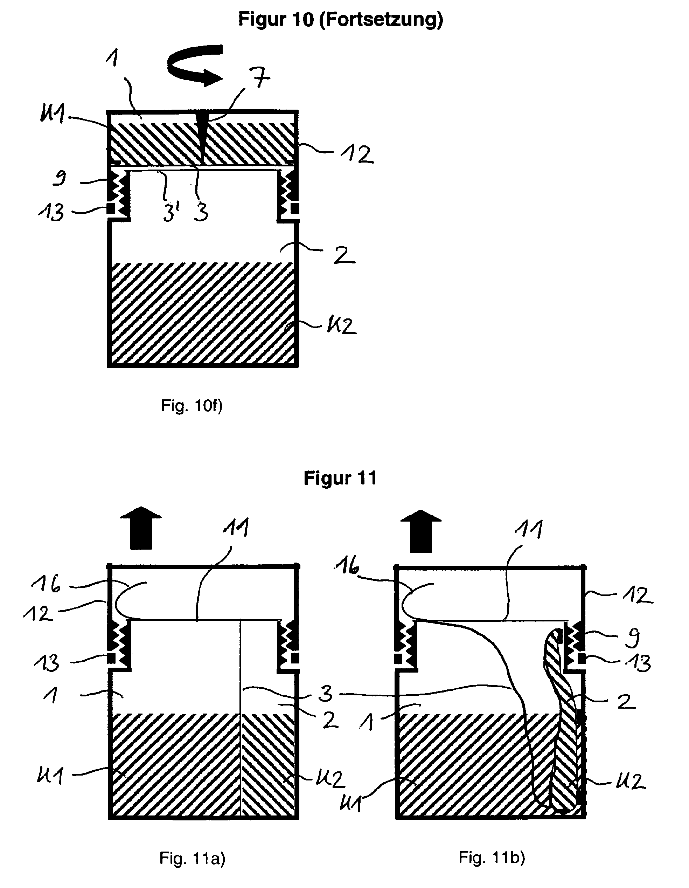

Figur 10 zeigt eine bevorzugte Ausführungsform der Ausführungsform **P2**. Hierbei bildet die eine Kammer 1 einen Teil des Deckels 12 einer Flasche 5. Figuren 10a)-f) zeigen hierbei unterschiedliche bevorzugte Anordnungen.

In Figur 10a) sind die Schneidmittel 7 mit der Wandung 8 verbunden oder liegen auf dieser auf, beispielsweise in Form eines Ringes und sind auf die Trennwand 3 der Kammer 1,2 gerichtet. Durch Entfernen der Sicherheitslasche 13 kann der Deckel 12 und damit die Kammer 1,2 über das Gewinde 9' durch Drehen auf die Schneidmittel 7 hin bewegt werden. Bei Kontakt der Schneidmittel 7 mit der Trennwand 3, die aus einem durchtrennbaren Material gefertigt ist, wird diese durchschnitten, so dass sich die Komponenten **K1, K2** mischen und/oder reagieren können. Wenn die Schneidmittel 7 exzentrisch in Bezug auf die Drehachse des Deckels 12 angeordnet sind -wie in Fig. 10a) gezeigt- wird durch weiteres Drehen des Deckels einen kurvenförmiger Einschnitt in der Trennwand 3 erzeugt, so dass die Trennwand wegklappen oder gar ausgeschnitten werden kann, was für die Mischung der Komponenten **K1, K2** sehr vorteilhaft ist.

In Figur 10b) sind mehrere Schneidmittel 7 über die Öffnung der Flasche verteilt angeordnet. Zwischen den Schneidmittel sind Durchlassöffnungen für die Komponente **K1, K2** in der Kammer 1,2 vorhanden. Typischerweise wird diese Art durch ein gegen die Trennwand gerichtete Spitzen aufweisendes Netz oder Lochplatte erreicht, welche auf der Wandung 8 aufliegt oder damit verbunden ist. Durch Entfernen der Sicherheitslasche 13 kann der Deckel 12 und damit die Kammer 1,2 über das Gewinde 9' durch Drehen auf die Schneidmittel 7 hin bewegt werden. Bei Kontakt der Schneidmittel 7 mit der Trennwand 3, die aus einem durchtrennbaren Material gefertigt ist, wird diese durchschnitten, so dass sich die Komponenten **K1, K2** mischen und/oder reagieren können. Das Vorhandensein mehrerer derart angeordneter Schneidmittel 7 weist den Vorteil auf, dass gleichzeitig die Trennwand 3 an mehreren Orten gleichzeitig perforiert wird und dadurch die Trennwand effizient zerstört wird.

In Figur 10c) ist die Komponente **K1** in verschiedenen Kammern 1, 1', 1" abgepackt und bilden einen Teil des Deckels 12. Diese Kammern 1, 1', 1" können gefüllte Kugeln oder Beutel, welche aus einem durchtrennbaren oder brechbaren Material gefertigt sind, sein. Weiterhin ist es grundsätzlich möglich, dass diese Kammern 1, 1', 1" unterschiedliche Komponenten **K1, K1', K1"** enthalten können. So wären beispielsweise drei- oder mehrkomponentige Haftvermittlerzusammensetzungen derart realisierbar, die miteinander nicht lagerfähig oder zu schlechterer Haftvermittlereigenschaften führen würden. Es sind mehrere Schneidmittel 7 über die Öffnung der Flasche verteilt angeordnet. Zwischen den Schneidmittel sind Durchlassöffnungen für die Komponente **K1** in der Kammer 1 vorhanden. Typischerweise wird diese Art durch ein gegen die Trennwand gerichtete Spitzen aufweisendes Netz oder Lochplatte erreicht, welche auf der Wandung 8 aufliegt oder damit verbunden ist. Durch Entfernen der Sicherheitslasche 13 kann der Deckel 12 und damit die Kammer 1 über das Gewinde 9' durch Drehen auf die Schneidmittel 7 hin bewegt werden. Bei Kontakt der Schneidmittel 7 mit der Trennwand 3 wird diese durchschnitten oder gebrochen, so dass sich die Komponenten **K1, K2** mischen und/oder reagieren können.

In Figur 10d) ist die Komponente **K1** in einer Kammer 1, welche aus einer durchtrennbaren Folie gefertigt ist, gelagert und die einen Teil des Deckels 12 bildet. Die andere Kammer 2 ist mit einer Trennwand 3' abgedichtet. In beiden Kammern sind Schneidmittel 7 nahe an den zwei Trennwänden 3, 3' angebracht. Durch Entfernen der Sicherheitslasche 13 kann der Deckel 12 über das Gewinde 9' gedreht werden, wodurch sich die Schneidmittel 7 aufeinander zu bewegen und hierbei die Trennwände 3, 3' durchschneiden, so dass sich die Komponenten **K1, K2** mischen und/oder reagieren können. Diese Ausführungsform besitzt den Vorteil, dass beide Kammern 1 und 2 mit der jeweiligen Komponente **K1, K2** befüllt werden können und separat voneinander dicht gelagert werden können.

In Figur 10e) ist eine Ausführungsform gezeigt, in welcher die eine Kammer 1 einen Teil des Deckels 12 bildet, der typischerweise mit einem Gewinde 9 mit der Flasche verbunden ist, und wobei der Deckel eine aufklappbare Schutzabdeckung 19 aufweist. Unter dieser Schutzabdeckung liegt die eine Kammer 1. Diese Kammer ist aus einem verformbaren und durchtrennbaren Material gefertigt, beispielsweise eine Kunststofffolie, einer Metallfolie oder einer Verbundfolie. An der Innenseite der Kammer ist auf der der Schutzabdeckung zugewanden Seite ein Schneidmittel 7 angebracht. Dieser Teil der Kammer weist typischerweise ein Ausbuchtung gegen aussen auf. Beim gewollten Mischen wird die Schutzabdeckung 19 aufgeklappt -dargestellt in Fig. 10e')- und anschliessend auf die Ausbuchtung gedrückt, wodurch das Schneidmittel 7 auf die Trennwände 3, 3' gedrückt wird, so dass diese einreissen und sich die Komponenten **K1, K2** mischen und/oder reagieren können.

Die in Figur 10f) beschriebene Ausführungsform ist sehr ähnlich zu derjenigen von Figur 10e) mit der Abdeckung. Hier ist die eine Kammer 1 ein Teil des Deckels 12. Die Kammer ist aus einem durchtrennbaren Material gefertigt. Die andere Kammer 2 ist durch eine Trennwand 3 abgeschlossen, welche ebenfalls aus einem durchtrennbaren Material gefertigt ist. In ungeöffnetem Zustand sind die beiden Wände 3, 3', welche die zwei Kammern 1,2 abgrenzen sehr nahe, bevorzugt in Kontakt miteinander, angeordnet. Durch Entfernen der Sicherheitslasche 13 und Drehen des Deckels 12 kann dieser mit der Kammer 1,2 sowie das Schneidmittel 7 über das Gewinde 9' auf die Trennwand 3 hin bewegt werden. Bei Kontakt der Schneidmittel 7 mit den Trennwänden 3, werden diese durchschnitten, so dass sich die Komponenten **K1, K2** mischen und/oder reagieren können. Auch diese Ausführungsform besitzt den Vorteil, dass beide Kammern 1 und 2 mit der jeweiligen Komponente **K1, K2** befüllt werden können und separat von einander dicht gelagert werden können.

Figur 11 zeigt eine bevorzugte Ausführungsform der Ausführungsform P4. Hierbei sind die zwei Kammern 1,2 durch eine herausreissbare Trennwand voneinander getrennt. In Figur 11a) ist diese Trennwand 3 weiterhin mit der Wandung 8 respektive 8' der jeweiligen Kammer 1,2 verbunden und bildet damit eine Abdeckung 11 der Öffnung 10. Beim Herausreissen wird zuerst mittels einer lasche 16 die Abdeckung 11 geöffnet. Danach wird die Trennwand 3 mittels der Sollbruchstellen, die sich dort befinden, wo die Trennwand mit der Innenwand der Kammern 1,2 verbunden sind, herausgerissen, so dass sich die Komponenten **K1, K2** mischen und/oder reagieren können. Anschliessend kann der Deckel wieder aufgeschraubt werden und beispielsweise geschüttelt werden. Weiterhin kann zur Applikation ein Filz oder Schwamm auf die Öffnung 10 angebracht, insbesondere mit Hilfe des Gewindes 9 aufgeschraubt werden.

In Figur 11 b) die herausreissbare Trennwand 3 derart gestaltet, dass sie an der Basis der Kammern 1,2 eine Reisslasche 16 aufweist. Diese Reisslasche 16 ist weiterhin mit der Abdeckung 11 verbunden, welche die Öffnung 10 der Flasche verschliesst. Nach Entfernen des Deckels 12 kann die Abdeckung 11 entfernt werden und anschliessend an der Reisslasche 16 gezogen werden oder direkt an der lasche 16, so dass sich die Trennwand 3 von unten her durch Abschälung von den Innenwänden der Kammern an den Sollbruchstellen ablöst, so dass sich die Komponenten **K1, K2** mischen und/oder reagieren können. Die Trennwand kann beispielsweise durch leichtes Anschweissen eines Folienbandes an die Innenwandung einer Flasche hergestellt werden. Die Reisslasche 16 ist typischerweise der Rest dieses Folienbandes.

In allen Figuren kann die erste Komponente **K1** in der ersten Kammer 1 und die zweite Komponente **K2** in der zweiten Kammer 2 oder aber die erste Komponente **K1** in der zweiten Kammer 2 und die zweite Komponente **K2** in der ersten Kammer 1 vorhanden sein.

Die Grösse der Kammern ist bevorzugt dergestalt, dass mindestens eine Kammer 1,2 ein grösseres Volumen aufweist, als das Volumen der darin vorhandenen Komponente **K1, K2.** Insbesondere ist zu bevorzugen, dass das nicht mit der dieser Komponente belegte Volumen mindestens dem Volumen der anderen Komponente entspricht.

Weiterhin liegt das Volumenverhältnis **K1/K2** der ersten Komponente **K1** zu der zweiten Komponente **K2** zwischen 1000/1 und 1/1000, insbesondere zwischen 200/1 bis 10/1 oder zwischen 1/200 bis 1/10. Bevorzugt liegt das Volumenverhältnis **K1/K2** zwischen 200/1 bis 20/1 oder zwischen 1/200 bis 1/20.

Zumindest die Wände derjenigen Kammer, in welcher die erste Komponente **K1** gelagert wird ist bevorzugt aus einem oder mehreren Materialien, welche gegen Diffusion von Wasser in flüssigem oder gasförmigem Zustand dicht oder zumindest so undurchlässig, dass die gewünschte Lagerstabilität nicht beeinträchtigt wird. Insbesondere eignen sich hierfür Aluminium oder Glas oder Verbundwerkstoffe. So kann beispielsweise die Komponente 1 in einem Aluminiumbeutel oder einem mit einem Aluminium beschichteten Kunststoffbeutel gelagert werden. Diese Art von Kammer hat den Vorteil, dass die Wand überall durchtrennbar ist, und deshalb keine genaue Positionierung des Beutels bedingt. Insbesondere eignen sich solche Beutel für die Ausführungsformen gemäss der Figur 10.

Die Packung 6 wird durch Befüllen der Kammern 1 und 2, mit den Komponenten **K1, K2,** gegebenenfalls gefolgt durch das Zusammensetzen der Verpackung, erstellt. Die Packung weist eine gute Lagerstabilität auf, typischerweise von mindestens 6 Monaten, insbesondere mindestens 9 Monaten. Wenn die Packung 6 zur Aufbringung eines Haftvermittlers verwendet werden will, kann sie gezielt aktiviert werden. Hierzu muss die Trennwand 3 entfernt oder durchtrennt werden, so dass die Komponenten **K1,** K2 min Kontakt geraten, mischen und/oder reagieren können. Das Mischen kann durch Schütteln unterstützt werden. Anschliessend wird die derart vorbereitete Haftvermittlerzusammensetzung der Packung 6 entnommen und auf eine zu verklebende oder abzudichtende Oberflächen appliziert. Es kann je nach Art der gewählten Bestandteile in den Komponenten **K1** und **K2** nötig sein, dass zwischen Kontaktierung der zwei Komponenten und der Applikation eine kurze Zeit, von typischerweise weniger als einer halben Stunde, gewartet werden muss, um eine optimale Haftvermittlerwirkung zu erreichen. Bevorzugt wird die Haftvermittlerzusammensetzung jedoch sofort aufgetragen. Die Oberfläche kann aus sehr unterschiedlichem Material bestehen, insbesondere bevorzugt sind Glas, Glaskeramiken, Metalle, Lacke sowie Kunststoffe. Es kann gegebenenfalls nötig sein, dass die Oberfläche vor der Applikation des Haftvermittlers mit weiteren chemischen, physikalischen oder phyiskochemischen Methoden vorbehandelt wird. Zur Applikation wird vorzugsweise auf eine Packung 6 mit Öffnung 10 eine poröse Abdeckung 20, insbesondere ein Filz oder ein Schwamm angebracht. Eine solche poröse Abdeckung 20 ist typischerweise auf einem Formteil befestigt, welcher im Randbereich einen Verbund mit der Verpackung gewährleistet. Dieser Verbund wird bevorzugt über eine Schraubverbindung über ein Gewinde 9 erreicht. Die zweikomponentige Haftvermittlerzusammensetzung wird in einer Schichtdicke von weniger als 1 Millimeter aufgetragen, typischerweise in einer Schichtstärke von weniger als 100 Mikrometer. Wenn die Haftvermittlerzusammensetzung Füllstoffe und/oder Bindemittel enthält ist eine Schichtstärke zwischen 1 und 100 Mikrometer, insbesondere zwischen 1 und 20 Mikrometer, bevorzugt. Falls die Haftvermittlerzusammensetzung keine Füllstoffe und kein Bindemittel enthält, ist eine Schichtstärke zwischen einer molekularen Monolage der Verbindung **A** und 50 Mikrometer, insbesondere zwischen 2 Nanometer und 10 Mikrometer, insbesondere zwischen 10 Nanometer und 1 Mikrometer, bevorzugt.

### Beispiele

### Herstellung Beispiele 1-5

**Tabelle 1.**

| Zweikomponentige Haftvermittlerzusammensetzungen | | | | | |
|---|---|---|---|---|---|
| **K1** | ***1*** [Gew.%] | ***2*** [Gew.%] | ***3*** [Gew.%] | ***4*** [Gew.%] | ***5*** [Gew.%] |
| 3-Mercaptopropyltrimethoxysilan (Silquest A-189, Osi Crompton) | 0.5 | | | | |
| 3-Aminopropyltrimethoxysilan (Silquest A-1110, Osi Crompton) | 0.5 | 1.0 | 0.5 | 1.0 | |
| N-(2-Aminoethyl)-3-aminopropyl-trimethoxysilan (Silquest A-1120, Osi Crompton) | | | | | 0.5 |
| Bis(pentan-2,4-dioano-O,O')(bis-isopropanolato)titan (Tyzor® AA-75) | | | | 1.0 | 1.0 |
| Methyltrimethoxysilan (Fluka) | 0.25 | | 0.5 | | 0.5 |

| **K2** | | | | | |
|---|---|---|---|---|---|
| Wasser deionisiert | 97.25 | 92.7 | 92.7 | 91.7 | 91.7 |
| Netzmittel (Tergitol TMN-6, Dow)) | 0.5 | 0.3 | 0.3 | 0.3 | 0.3 |
| Essigsäure | 1 | 6 | 6 | 6 | 6 |
| | | | | | |
| Total | 100 | 100 | 100 | 100 | 100 |

Die Komponenten **K1** und **K2** wurden separat voneinander durch Vermischen unter Rühren hergestellt, wobei das Mischen der drei Bestandteile der ersten Komponente **K1** unter Stickstoff erfolgt.

Die Komponenten wurden gemischt und nach 30 Minuten auf unterschiedliche Untergründe durch Bestreichen mit einem getränkten Papiertuch (Tela oder Kleenex®) appliziert. Anschliessend wurde der Klebstoff nach 10 Minuten appliziert.

### Herstellung Beispiel 6

Beispiel ***6*** beruht auf Sika® Aktivator (kommerziell erhältlich bei Sika Schweiz AG). Sika® Aktivator ist eine Haftvermittlerzusammensetzung enthaltend eine Organo-Siliziumverbindung **A** und eine Organo-Titanverbindung **A** sowie ein leichtflüchtiges Lösungsmittel. Der Sika Aktivator wird in einer Kammer und Dibutylzinndialaurat **B** in einer zweiten Kammer gelagert. Die Mengen sind derart, dass 3 Gew-% Dibutylzinndilaurat bezogen auf das Gewicht des Sika® Aktivators eingesetzt werden.

Die Komponenten wurden gemischt. Kurz nach dem Mischen zeigte sich eine gelb-orange Färbung. Nach 10 Minuten wurde die Mischung auf die unterschiedlichen Untergründe durch Bestreichen mit einem getränkten Papiertuch (Tela oder Kleenex®) appliziert. Anschliessend wurde der Klebstoff nach 10 Minuten appliziert.

### Untergrundvorbereitung und Applikation des Primers

| Untergrund | Bezugsquelle |
|---|---|
| Floatglas | Firma Rocholl, Schönbrunn, Deutschland |
| Glas mit Bismut-basierender | Firma Rocholl, Schönbrunn, Deutschland |
| Keramikbeschichtung Cerdec 14259 AlMgSi1 | Firma Rocholl, Schönbrunn, Deutschland |

Das AlMgSi1 wurde mit Schleifpapier angeschliffen.

Die Untergründe wurden mit einem Gemisch Isopropanol/Wasser (1/1 w/w) gereinigt. Nach einer Wartezeit von 5 Minuten wurde die Haftvermittlerzusammensetzung auftragen. Bei Glas wurde nicht die Zinn-Seite für die Haftungen verwendet.

### Applikation des Klebstoffs und Testmethoden

Nach der Applikation der Haftvermittlerzusammensetzung wurde hierauf eine Klebstoffraupe eines Klebstoff appliziert. Es handelte sich hierbei um die folgenden bei Sika Schweiz AG kommerziell erhältlichen feuchtigkeitshärtenden Polyurethan- oder silan-modifizierten Polyurethanklebstoffe:

| | |
|---|---|
| Sikaflex®-250 DM-1 | (,DM-1') |
| SikaTack®-Ultrafast | (,STUF') |
| SikaTack®-Plus Booster | ('STPB') |

Der Klebstoff wurde nach einer Aushärtezeit von 7 Tagen Klimaraumlagerung (,KL') (23°C, 50% rel. Luftfeuchtigkeit) sowie nach einer anschliessend Wasserlagerung von 7 Tagen bei 25°C (,WB') sowie einer Kataplasma-Lagerung (,CP') von 7 Tagen bei 70°C, 100 % rel. Luftfeuchtigkeit, getestet.

Die Haftung des Klebstoffes wurde mittels ,Raupentest' getestet. Hierbei wird am Ende knapp über der Klebefläche eingeschnitten. Das eingeschnittene Ende der Raupe wird mit einer Rundzange Zange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen der kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = adhäsiver Bruch

Durch den Zusatz "F" wird angegeben, dass der Klebstoff eine Filmhaftung auf dem Primer aufweist, so dass der Bruch zwischen Primer und Klebstoff erfolgt. Testresultate mit Kohäsionsbrüchen von weniger als 75% gelten als ungenügend.

Hochgeschwindigkeitsfestigkeit: es wurde die Frühfestigkeit durch einen Hochgeschwindigkeitszugversuch nach 1 Stunde Aushärtung bei unterschiedlichen Aushärtebedingungen ermittelt. Messgeschwindigkeit 1 m/s.

FOG: Die Frühfestigkeit wurde mittels einer Zwick Apparatur gemessen. Messgeschwindigkeit 200 mm/min nach einer Aushärtung von 2 Stunden bei 23°c und 50% relativer Luftfeuchtigkeit.

### Resultate

**Tabelle 2:**

| | | | | | | |
|---|---|---|---|---|---|---|
| Haftungsresultate Raupentest mit Bewertung nach unterschiedlichen Lagerungen(KL/WB/CP). | | | | | | |

| | STUF | | | DM-1 | | |
|---|---|---|---|---|---|---|
| | AlMgSi1 | Glas | Bi-Keramik | AlMgSi1 | Glas | Bi-Keramik |
| ***Ref.1*** | 5/5/1 | 5/5/2 | 5/5/1 | 5/5/5 | 5/5/5 | 5/5/5 |
| ***Ref.2*** | 3/5F/1 | 5F/5F/1 | 5/5/1 | 5/5/5 | 5/5/5 | 5/5/5 |
| ***Ref.3*** | 5F/4F/1 | 3/2/2 | 5/5/1 | 5/5/5 | 5/5/5 | 5/5/5 |
| ***1*** | 1/1/1 | 1/1/1 | 1/1/1 | 1/2/3 | 1/1/1 | 1/1/1 |
| ***2*** | 1/4/2 | 2/4/3 | n.m.^{‡} | n.m. ^{‡} | 2/4/3 | n.m. ^{‡} |
| ***3*** | 1/4/3 | 1/2/1 | n.m. ^{‡} | n.m. ^{‡} | 1/2/1 | n.m. ^{‡} |
| ***4*** | 2/4/3 | 1/2/1 | n.m.^{‡} | n.m. ^{‡} | 1/2/1 | n.m. ^{‡} |
| ***5*** | 1/3/3 | 1/4/2 | n.m.^{‡} | n.m. ^{‡} | 1/4/2 | n.m. ^{‡} |

| | | | | | | |
|---|---|---|---|---|---|---|
| ^{‡} n.m. = nicht gemessen | | | | | | |

***Ref.1*** ist das Vergleichsbeispiel ohne Haftvermittlerauftrag. Bei ***Ref. 2*** wurde lediglich ein Wasserauftrag und in *Ref.3* ein Wasser/Netzmittel (Konzentration Beispielsanalog)-Auftrag durchgeführt. Der Auftrag erfolgte gleich wie bei den Haftvermittlerzusammensetzungen, nämlich mittels getränktem Papiertuch (Tela oder Kleenex®).

Bei Beispiel **6** wurde im Vergleich zu Sika® Aktivator der Frühfestigkeitsaufbau bestimmt. Hierzu wurden Aluminumbleche mit Isoporpanol/Wasser-Mischung wie beschrieben gereinigt, anschliessend wurde der Primer Sika® Primer-206 G+P mit einem Pinsel appliziert, 10 Minuten bei 25°C abgelüftet, und anschliessend das Beispiel ***6,*** beziehungsweise als Vergleich Sika® Aktivator, mittels getränktem Papiertuch (Tela oder Kleenex®) aufgebracht und schliesslich mit SikaTack®-Ultrafast beziehungsweise SikaTack®-Plus Booster verklebt.

**Tabelle 3.**

| Hochgeschwindigkeitsprüfung (1 m/s) mit STBP. | | | |
|---|---|---|---|
| | Sika Aktivator® (Vergleich) | ***6*** | |
| Festigkeit [N/mm²] | | | |
| -10°C/90% rel.Luft-Feuchtigkeit | 0.72 | 0.91 | +26% |
| 5°C/90% rel.Luft-Feuchtigkeit | 1.14 | 1.4 | +23% |
| 23°C/50% rel.Luft-Feuchtigkeit | 1.16 | 1.3 | +12% |

| Energie[J] | | | |
|---|---|---|---|
| -10°C/90% rel.Luft-Feuchtigkeit | 1.7 | 2.1 | +24% |
| 5°C/90% rel.Luft-Feuchtigkeit | 4 | 5.2 | +30% |
| 23°C/50% rel.Luft-Feuchtigkeit | 6 | 13.3 | +122% |

**Tabelle 4.**

| FOG-Messungen mit STUF. | | | |
|---|---|---|---|
| | Sika Aktivator® (Vergleich) | ***6*** | |
| Festigkeit [N/cm] | 27.7 | 38.7 | +40% |
| Energie[J] | 3.05 | 5.1 | +67% |

Die Resultate zeigen, dass mit den erfindungsgemässen zweikomponentigen Haftvermittlerzusammensetzungen ausgezeichnete Haftung auf unterschiedlichen Untergründen und mit unterschiedlichen Klebstoffen erreicht werden können, was sich auch in einem schnellen Haftungsaufbau zeigt.

### Bezugszeichenliste

- K1: erste Komponente
- K2: zweite Komponente
- 1: erste Kammer
- 2: zweite Kammer
- 3: Trennwand
- 3': Dichtung
- 4: Aussenwand
- 4': Aussenwand
- 5: Verpackung
- 6: Packung
- 7: Schneidmittel
- 8: Wandung
- 8': Wandung
- 9: Gewinde
- 9': Gewinde
- 10: Öffnung
- 11: Abdeckung
- 12: Deckel
- 13: Sicherheitslasche
- 14: Fixierungsmittel
- 15: Mischhilfsmittel
- 16: Reisslasche
- 17: Mischungshilfsmittel
- 18: Klemmverschluss
- 19: Schutzabdeckung
- 20: poröse Abdeckung
- 21: Blase

## Patentansprüche

1. Zweikomponentige Haftvermittlerzusammensetzung zur Oberflächenvorbehandlung umfassend zwei Komponenten, wobei
die erste Komponente **K1** mindestens eine hydrolysierbare Haftvermittlersubstanz **A** umfasst, welche ausgewählt ist aus der Gruppe umfassend Organo-Siliziumverbindungen, Organo-Titanverbindungen, Organo-Zirkoniumverbindungen und Mischungen daraus,
und wobei
die zweite Komponente **K2** mindestens eine Verbindung B umfasst, die mit der Haftvermittlersubstanz **A** reagiert oder eine Kondensation der Haftvermittlersubstanz **A** auslöst oder katalysiert,
und wobei
die erste und die zweite Komponenten im ungeöffneten Zustand in zwei durch mindestens eine Trennwand (3) voneinander getrennten Kammern (1,2) vorliegen.

2. Zweikomponentige Haftvermittlerzusammensetzung gemäss Anspruch 1, **dadurch gekennzeichnet, dass** die hydrolysierbare Haftvermittlersubstanz **A** eine Organo-Siliziumverbindung ist, welche mindestens eine, insbesondere mindestens zwei, Alkoxygruppe trägt, welche über eine Sauerstoff-Silizium-Bindung direkt an ein Siliziumatom gebunden ist oder sind.

3. Zweikomponentige Haftvermittlerzusammensetzung gemäss Anspruch 2 **dadurch gekennzeichnet, dass** die Organo-Siliziumverbindung mindestens einen Substituenten trägt, welcher über eine Silizium-Kohlenstoffbindung an das Siliziumatom gebunden ist, und welcher gegebenenfalls eine funktionelle Gruppe aufweist ausgewählt aus der Gruppe umfassend Oxiran-, Hydroxy-, (Meth)acryloxy-, Amino-, Mercapto- und Vinylgruppe.

4. Zweikomponentige Haftvermittlerzusammensetzung gemäss Anspruch 3 **dadurch gekennzeichnet, dass** die hydrolysierbare Haftvermittlersubstanz **A** die Formel (I) aufweist 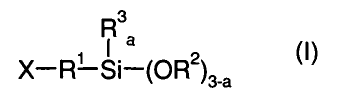 wobei
R¹ für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen, steht;
R² für eine Alkylgruppe mit 1 bis 5 C-Atomen, insbesondere Methyl oder Ethyl, steht;
R³ für eine Alkylgruppe mit 1 bis 8 C-Atomen, insbesondere Methyl, steht; X für ein H, oder eine funktionelle Gruppe steht, welche ausgewählt ist aus der Gruppe umfassend Oxiran, OH, (Meth)acryloxy, Amin, SH und Vinyl;
und
a für 0, 1 oder 2, insbesondere 0, steht;

5. Zweikomponentige Haftvermittlerzusammensetzung gemäss Anspruch 3, **dadurch gekennzeichnet, dass** der Substituent R¹ für eine Methylen-, Propylen-, Methylpropylen-, Butylen- oder Dimethylbutylengruppe, insbesondere eine Propylengruppe, steht.

6. Zweikomponentige Haftvermittlerzusammensetzung gemäss Anspruch 4, **dadurch gekennzeichnet, dass** die hydrolysierbare Haftvermittlersubstanz **A** eine ausgewählt ist aus der Gruppe umfassend Methyltriacetoxysilan, Ethyltriacetoxysilan, 3-Methacryloxypropyltrialkoxysilane, 3-Aminopropyltrialkoxysilane, Bis-[3-(trialkoxysilyl)-propyl]-amine, Tris-[3-(trialkoxysilyl)-propyl]-amine, 3-Aminopropyltrialkoxysilane, N-(2-Aminoethyl)-3-aminopropyl-trialkoxysilane, N-(2-Aminoethyl)-N-(2-Aminoethyl)-3-aminopropyl-trialkoxysilane, 3-Glycidyloxypropyltrialkoxysilane, 3-Mercaptopropyltrialkoxysilane, Vinyltrialkoxysilane, Methyltrialkoxysilane, Octyltrialkoxysilane, Dodecyltrialkoxysilane und Hexadecyltrialkoxysilane, insbesondere geeignet sind die Methoxy- und Ethoxysilane der oben genannten Verbindungen.

7. Zweikomponentige Haftvermittlerzusammensetzung gemäss Anspruch 1, **dadurch gekennzeichnet, dass** die hydrolysierbare Haftvermittlersubstanz A eine Organo-Titanverbindung ist, welche mindestens eine funktionelle Gruppe trägt, welche ausgewählt ist aus der Gruppe umfassend Alkoxygruppe, Sulfonatgruppe, Phosphatgruppe Carboxylatgruppe oder Mischungen davon trägt, und welche über ein Sauerstoff-Titan-Bindung direkt an ein Titanatom gebunden ist.

8. Zweikomponentige Haftvermittlerzusammensetzung gemäss Anspruch 7, **dadurch gekennzeichnet, dass** die Alkoxygruppe eine Methoxy-, Butyl- oder iso-Propylgruppe, insbesondere eine iso-Propylgruppe ist.

9. Zweikomponentige Haftvermittlerzusammensetzung gemäss einem der vorhergehenden Ansprüche, **dadurch gekennzeichnet, dass** die erste Komponente **K1** mindestens zwei hydrolysierbare Haftvermittlersubstanzen A umfasst.

10. Zweikomponentige Haftvermittlerzusammensetzung gemäss Anspruch 9, **dadurch gekennzeichnet, dass** die erste Komponente **K1** mindestens eine hydrolysierbare Haftvermittlersubstanz **A**, welche eine Organo-Siliziumverbindung ist, und mindestens eine hydrolysierbare Haftvermittlersubstanz **A**, welche eine Organo-Titanverbindung ist, umfasst.

11. Zweikomponentige Haftvermittlerzusammensetzung gemäss einem der vorhergehenden Ansprüche, **dadurch gekennzeichnet, dass** die Verbindung **B** in der zweiten Komponente **K2** eine Organo-Zinnverbindung oder eine Säure ist.

12. Zweikomponentige Haftvermittlerzusammensetzung gemäss Anspruch 11, **dadurch gekennzeichnet, dass** die Verbindung **B** eine Organo-Zinnverbindung, insbesondere Dialkyl-Zinndiacetylacetonat oder ein Dialkylzinndicarboxylat, insbesondere Dibutylzinndilaurat oder Dibutylzinndiacetat, bevorzugt Dibutylzinndilaurat, ist.

13. Zweikomponentige Haftvermittlerzusammensetzung gemäss Anspruch 11, **dadurch gekennzeichnet, dass** die Verbindung **B** eine Säure, insbesondere eine anorganische Säure, bevorzugt phosphorhaltig, schwefelhaltig, ist.

14. Zweikomponentige Haftvermittlerzusammensetzung gemäss Anspruch 11, **dadurch gekennzeichnet, dass** die Verbindung **B** eine Säure, insbesondere eine organische Säure ist, bevorzugt Ameisen-, Essig- oder Aminosäure, meist bevorzugt Essigsäure, ist.

15. Zweikomponentige Haftvermittlerzusammensetzung gemäss einem der einem der vorhergehenden Ansprüche, **dadurch gekennzeichnet, dass** die zweite Komponente Wasser umfasst.

16. Zweikomponentige Haftvermittlerzusammensetzung gemäss einem der einem der vorhergehenden Ansprüche, **dadurch gekennzeichnet, dass** die erste **K1** und/oder die zweite **K2** Komponente zusätzlich ein flüchtiges Lösungsmittel, insbesondere Ethanol, Methanol, Isopropanol oder Hexan, umfasst.

17. Zweikomponentige Haftvermittlerzusammensetzung gemäss einem der vorhergehenden Ansprüche, **dadurch gekennzeichnet, dass** die erste **K1** und / oder die zweite **K2** Komponente flüssig ist.

18. Verwendung einer Verpackung (5), welche zwei durch mindestens eine Trennwand (3) voneinander getrennten Kammern (1,2) für die Lagerung von zwei Komponenten (**K1, K2**) aufweist, **dadurch gekennzeichnet, dass** die erste Komponente **K1** eine erste Komponente **K1** ist, wie sie in einem der Ansprüche 1 bis 10 oder 16 bis 17 beschrieben ist; und dass die zweite Komponente **K2** eine zweite Komponente **K2** ist, wie sie in einem der Ansprüche 1 oder 11 bis 15 oder 16 bis 17 beschrieben ist.

19. Verwendung einer Verpackung gemäss Anspruch 18, **dadurch gekennzeichnet, dass** die mindestens eine Trennwand (3) eine Dichtung (3') ist, welche im ungeöffneten Zustand der Verpackung (5) die zwei Kammern (1,2) voneinander abtrennt.

20. Verwendung einer Verpackung gemäss Anspruch 19, **dadurch gekennzeichnet, dass** die Dichtung (3') im geschlossenen Zustand durch mindestens zwei Wandungen (8,8') gequescht wird, wobei mindestens eine Wandung (8,8') durch äusseren Einfluss bewegbar, insbesondere über ein Gewinde (9), ausgestaltet ist, so dass durch den äusseren Einfluss die Dichtung (3') lose wird und die zwei Kammern (1,2) miteinander verbunden werden.

21. Verwendung einer Verpackung gemäss Anspruch 18, **dadurch gekennzeichnet, dass** die Trennwand (3) im Bereich der Verbindung mit der Innenwand der Kammern 1,2 verbunden ist eine Sollbruchstelle aufweist, und aus der Verpackung 5 herausgerissen werden kann.

22. Verwendung einer Verpackung gemäss Anspruch 18, **dadurch gekennzeichnet, dass** die Trennwand (3) aus einem Material gefertigt ist, das durch die Aufbringung von Druck bricht oder einreisst.

23. Verwendung einer Verpackung gemäss Anspruch 21 oder 22, **dadurch gekennzeichnet, dass** mindestens eine Kammer (1,2) ein grösseres Volumen als das der darin vorhandenen Komponente aufweist, insbesondere bevorzugt derart dass das nicht mit der dieser Komponenten belegte Volumen mindestens dem Volumen der anderen Komponente entspricht.

24. Verwendung einer Verpackung gemäss Anspruch 22 oder 23, **dadurch gekennzeichnet, dass** der Druck durch ein Bersthilfsmittel, insbesondere ein Schneidmittel (7) auf die Trennwand (3) aufgebracht wird.

25. Verwendung einer Verpackung gemäss einem der Ansprüche 18 bis 24, **dadurch gekennzeichnet, dass** das Volumenverhältnis **K1/K2** der ersten Komponente **K1** zu der zweiten Komponente **K2** zwischen 1000/1 und 1/1000, insbesondere zwischen 200/1 bis 10/1 oder zwischen 1/200 bis 1/10, bevorzugt zwischen 200/1 bis 20/1 oder zwischen 1/200 bis 1/20, ist

26. Verwendung einer Verpackung gemäss einem der Ansprüche 18 bis 25, **dadurch gekennzeichnet, dass** zumindest die Wände derjenigen Kammer, in welcher die erste Komponente **K1** gelagert wird, aus einem oder mehreren Materialien, welche gegen Diffusion von Wasser in flüssigem oder gasförmigem Zustand dicht sind, insbesondere Aluminium oder Glas oder Verbundwerkstoffen, besteht.

27. Packung (6) bestehend aus
einer Verpackung (5), welche zwei durch mindestens eine Trennwand (3) voneinander getrennten Kammern (1,2) aufweist;
und
einer zweikomponentigen Haftvermittlerzusammensetzung gemäss einem der Ansprüche 1 bis 17.

28. Packung (6) gemäss Anspruch 27, **dadurch gekennzeichnet, dass** die Trennwand (3) aus einem Material gefertigt ist, das durch die Aufbringung von Druck bricht oder einreisst.

29. Packung (6) gemäss Anspruch 27 oder 28, **dadurch gekennzeichnet, dass** zumindest die Wände der Kammer, in welcher die erste Komponente gelagert wird, aus einem oder mehreren Materialien, welche gegen Diffusion von Wasser in flüssigem oder gasförmigem Zustand dicht oder zumindest so undurchlässig, dass die gewünschte Lagerstabilität nicht beeinträchtigt wird, sind, insbesondere Aluminium oder Glas oder Verbundwerkstoff, besteht.

30. Packung (6) gemäss einem der Ansprüche 27 bis 29 **dadurch gekennzeichnet, dass** das Volumenverhältnis **K1/K2** der ersten Komponente **K1** zu der zweiten Komponente **K2** zwischen 1000/1 und 1/1000, insbesondere zwischen 200/1 bis 10/1 oder zwischen 1/200 bis 1/10, bevorzugt zwischen 200/1 bis 20/1 oder zwischen 1/200 bis 1/20, ist.

31. Verfahren der Applikation einer zweikomponentigen Haftvermittlerzusammensetzung zur die Oberflächenvorbehandlung gemäss einem der Ansprüche 1 bis 17, **dadurch gekennzeichnet, dass** durch Aufbringen von Druck auf die Trennwand (3) diese bricht und anschliessend daran die zwei Komponenten (**K1, K2**) miteinander in Kontakt gelangen, durch eine Öffnung (10), die gegebenenfalls durch Entfernen einer Abdeckung (11) zugänglich ist, auf eine Substrat-Oberfläche als appliziert wird.

32. Verfahren gemäss Anspruch 31, **dadurch gekennzeichnet, dass** zwischen dem Kontaktieren der zwei Komponenten (**K1, K2**) und der Applikation ein Schritt der Vermischung, insbesondere durch Schütteln der Packung (6) verursacht, durchgeführt wird.
